# EUROPÄISCHE PATENTANMELDUNG

(11) **EP 2 211 248 A2**
(43) Veröffentlichungstag der Anmeldung: **28.07.2010**
(21) Anmeldenummer: 09176995.0
(22) Anmeldetag: 25.11.2009
(51) Int. Cl.: G05D 23/02

(54) **Gegen Eigendrehung gesichertes Thermostatventil**

(30) Priorität: 20.01.2009 DE 102009005531
(71) Anmelder: Honeywell Technologies Sarl, 1110 Morges (CH)
(72) Erfinder: Svejnoha, Petr, 68201, Vyskov (CZ); Borastero, Ivan, 79828, Prostejov (CZ)
(74) Vertreter: Graefe, Jörg

(57) **Zusammenfassung**

Die Erfindung betrifft ein Thermostatventil, insbesondere für Heizkörper oder dergleichen, mit einem Ventilunterteil und einem Thermostataufsatz (A), wobei der Thermostataufsatz (A) an dem Ventilunterteil befestigt ist und wobei der Thermostataufsatz (A) zumindest ein inneres Teil (1a bis 1e) und zumindest ein äußeres Teil aufweist und das zumindest eine äußere Teil (2a bis 2e) durch Betätigung durch einen Benutzer oder ein Stellglied gegenüber dem inneren Teil (1a bis 1e) drehbar ist, wobei der Thermostataufsatz (A) Mittel zur Verhinderung einer Eigendrehung des zumindest einen äußeren Teils (2a bis 2e) gegenüber dem zumindest einen inneren Teil (1a bis 1e) aufweist.

## Beschreibung

Die vorliegende Erfindung betrifft ein Thermostatventil, insbesondere für Heizkörper oder dergleichen, mit einem Ventilunterteil und einem Thermostataufsatz. Der Thermostataufsatz ist an dem Ventilunterteil befestigt und weist zumindest ein inneres Teil und zumindest ein äußeres Teil auf. Das zumindest eine äußere Teil ist durch Betätigung durch einen Benutzer oder durch ein Stellglied, insbesondere einen Stellmotor gegenüber dem inneren Teil drehbar.

Derartige Thermostatventile sind sehr weit verbreitet. In vielen Ländern ist die Verwendung von Thermostatventilen an einem Heizkörper vorgeschrieben. Über eine Drehung des zumindest einen äußeren Teils gegenüber dem zumindest einen inneren Teil des Thermostataufsatzes ist es möglich eine Solltemperatur einzustellen, die in dem Raum erreicht werden soll, der durch den mit dem Thermostatventil versehenen Heizkörper beheizt wird. In dem Thermostataufsatz ist in der Regel ein Thermoelement vorgesehen, welches sich entsprechend der Raumtemperatur ausdehnt. Bei höheren Temperaturen dehnt sich das Thermoelement weiter aus und drückt damit einen Ventilstößel des Ventilunterteils auf einen Ventilsitz. Dadurch wird das Thermostatventil geschlossen. Bei niedrigeren Temperaturen zieht sich das Thermoelement zusammen. Es gibt damit Platz für ein Lösen des Ventilstößels von dem Ventilsitz. Das Thermoelement nimmt den Ventilstößel jedoch nicht mit. Es muss daher auf andere Art und Weise eine Rückstellkraft zum Zurückstellen des Ventilstößels bereitgestellt werden. Dazu sind in den Thermostatventilen Rückstellfedern vorgesehen.

Die Rückstellfedern führen zu einer ständig wirkenden Kraft, die auf das äußere Teil des Thermostataufsatzes drückt. Diese Kraft der Rückstellfeder auf das äußere Teil des Thermostataufsatzes kann zu einem selbsttätigen Verstellen der Solltemperatur führen, die durch das Verdrehen eines äußeren Teils gegenüber dem inneren Teil eingestellt ist. Durch unterschiedliche Ausdehnungskoeffizienten des Materials des äußeren Teils und des inneren Teils kann dieser Effekt verstärkt werden. Im Ergebnis kann das dazu führen, dass sich nach längerer Zeit das Thermostatventil selbsttätig auf die maximale Solltemperatur eingestellt hat. Dieser Effekt ist unerwünscht.

In der Vergangenheit hat es bereits verschiedene Ansätze gegeben, den Effekt zu vermeiden. Die konstruktiven Bemühungen, die Effekte zu vermeiden, waren jedoch zum Teil sehr aufwändig oder nur von bedingter Tauglichkeit. So konnte bei einigen Ansätzen die Eigendrehung nur für gewisse Zeit unterbunden werden. Ab einem gewissen Alterungszustand des Thermostatventils kam es dann wieder zu der nicht gewünschten Eigendrehung.

Der Erfindung lag daher die Aufgabe zu Grunde, ein Thermostatventil so zu verbessern, dass eine Eigendrehung dauerhaft vermieden ist und die Vermeidung durch einfache konstruktive Mittel erreicht wird.

Diese Aufgabe wird erfindungsgemäß dadurch gelöst, dass der Thermostataufsatz Mittel zur Verhinderung einer Eigendrehung des zumindest einen äußeren Teils gegenüber dem zumindest einen inneren Teil aufweist.

Die Mittel zur Verhinderung der Eigendrehung können einen Zahnkranz umfassen. Dieser Zahnkranz kann mit einem oder mehreren Eingriffselementen zusammenwirken, die ebenfalls Teil der Mittel zur Verhinderung der Eigendrehung sind und in den Zahnkranz eingreifen. Zum Einstellen der Solltemperatur werden Zahnkranz und Eingriffselemente gegeneinander verschoben. Ist die Solltemperatur eingestellt, hält eine formschlüssige und zum Teil auch kraftschlüssige Verbindung die Eingriffselemente und den Zahnkranz in einer stabilen Stellung zueinander. Die Eingriffselemente können in einer ersten Variante zumindest einen Nocken oder zumindest eine Nase umfassen. In einer zweiten Variante kann es sich bei den Eingriffselementen um elastische Elemente handeln, die sich in den Zahnkranz eindrücken.

Die Eingriffselemente können zumindest eine Feder umfassen, die geeignet und eingerichtet ist, den zumindest einen Nocken oder die zumindest eine Nase in eine Kerbe zwischen zwei Zähnen des Zahnkranzes zu drücken.

Der zumindest eine Nocken oder die zumindest eine Nase und die Feder können als ein Teil hergestellt sein.

Der zumindest eine Nocken oder die zumindest eine Nase und die Feder können zum Beispiel ein Kunststoffspritzgussteil sein. Das zumindest eine äußere Teil kann in einem Bereich als Hülse ausgebildet sein, an den sich radial nach Außen Stege erstrecken. Zumindest einige der Stege können über blattfederähnliche Federabschnitte verbunden sein und an den Federabschnitten können Nocken ausgebildet sein.

Ebenfalls ist denkbar, dass der zumindest eine Nocken und die zumindest eine Nase und die Feder ein Stanzbiegeteil aus Metall sind. Das Stanzbiegeteil kann eine Blattfeder sein, das auf einer ersten Seite eingekerbt ist, wodurch die Kerbe auf einer zweiten Seite der Blattfeder eine Nocke ausprägt.

Der zumindest eine Nocken oder die zumindest eine Nase und die Feder können ebenso als verschiedene Teile ausgebildet sein.

Der Zahnkranz kann als äußerer Zahnkranz ausgebildet sein. Dieser äußere Zahnkranz kann an dem zumindest einen äußeren Teil des Thermostataufsatzes vorgesehen sein. Die Eingriffselemente sind dann an dem zumindest einen inneren Teil des Thermostataufsatzes vorgesehen.

Ebenso ist es denkbar, dass der Zahnkranz als innerer Zahnkranz ausgebildet ist. Der innere Zahnkranz kann dann an dem zumindest einen inneren Teil des Thermostataufsatzes vorgesehen sein. Die Eingriffselemente sind dann an dem zumindest einen äußeren Teil des Thermostataufsatzes vorgesehen.

In einer alternativen Ausführung des erfindungsgemäßen Thermostatventils kann das Mittel zur Verhinderung der Eigendrehung eine Zylinderfläche und elastische Elemente, insbesondere Blattfedern umfassen. Die elastischen Elemente, d.h. insbesondere die Blattfedern sind dann eingespannt und liegen mit Vorspannung an der Zylinderfläche an. Die Zylinderfläche ist an dem zumindest einen äußeren Teil des Thermostataufsatzes vorgesehen. Die elastischen Elemente, d.h. insbesondere die Blattfedern sind an dem zumindest einen inneren Teil des Thermostataufsatzes angebracht. Durch die Vorspannung der elastischen Elemente, d.h. insbesondere der Blattfedern liegen diese reibschlüssig an der Zylinderfläche an. Durch die Reibung zwischen den Blattfedern und der Zylinderfläche wird die Eigendrehung des inneren Anteils gegenüber dem äußeren Teil verhindert.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: einen Schnitt durch einen Thermostataufsatz eines Thermostatventils in perspektivischer Darstellung,
- Fig. 2: einen Schnitt durch den Thermostataufsatz entlang der Linie II-II in der Figur 1 in perspektivischer Darstellung,
- Fig. 3: den Schnitt gemäß Figur 2 in Draufsicht,
- Fig. 4: einen Schnitt analog Figur 3 durch eine erste alternative Ausführung eines Thermostataufsatzes,
- Fig. 5: einen Schnitt analog Figur 3 durch eine zweite alternative Ausführung eines Thermostataufsatzes,
- Fig. 6: einen Schnitt analog Figur 3 durch eine dritte alternative Ausführung eines Thermostataufsatzes,
- Fig. 7: einen Schnitt analog Figur 3 durch eine vierte alternative Ausführung eines Thermostataufsatzes.

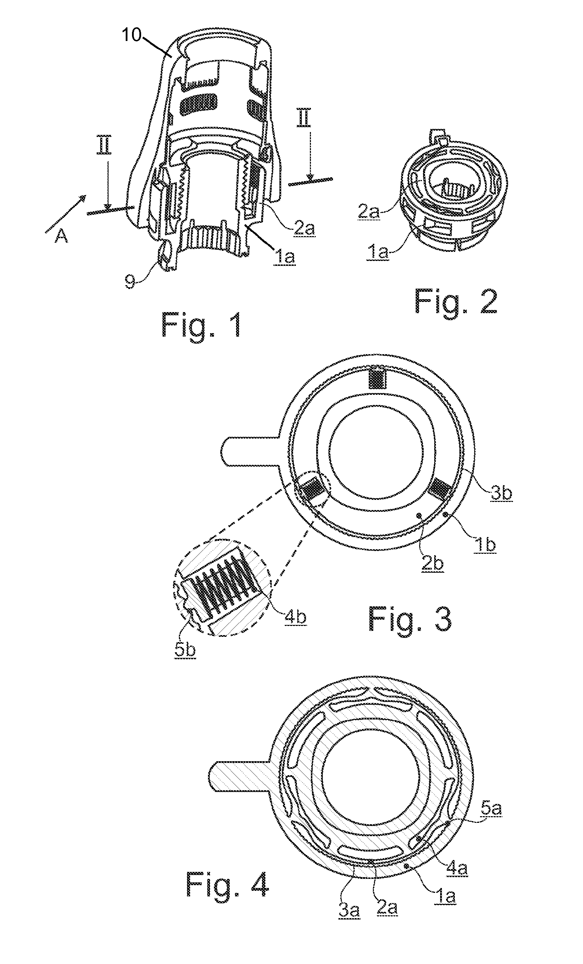

Figur 1 zeigt in schematischer Darstellung Teile eines Thermostataufsatzes, nämlich ein inneres Teil 1a und ein äußeres Teil 2a sowie eine Kappe 10. Das äußere Teil 2a ist mit der Kappe 10 verbunden. Die Kappe 10 ist dazu auf das äußere Teil 2a aufgeschnappt. Die Kappe 9 und das äußere Teil 2a sind mit dem inneren Teil 1a durch ein Innengewinde des äußeren Teils 2a und ein Außengewinde des inneren Teils 1a verbunden. Das innere Teil 1a ist mit einem Sockel 9 in einem Stück ausgebildet. Der Sockel 9 kann auf einem Ventilunterteil eines Thermostatventils angebracht werden.

Die Bezeichnungen inneres Teil 1a und äußeres Teil 2a gehen auf die Anordnung der Teile 1a, 2a bezogen auf die Gewindeverbindung zwischen den beiden Teilen 1a, 2a zurück.

Das innere Teil 1a weist ein Außengewinde auf, während das äußere Teil 2a ein Innengewinde hat. Das Außengewinde des inneren Teils 1b ist mit dem Innengewinde des äußeren Teils 2a verschraubt. Durch ein Drehen des äußeren Teils 2a mit der Kappe 10 gegenüber dem inneren Teil 1a kann bei einem Thermostatventil die Solltemperatur eingestellt werden.

Während des Gebrauchs des Thermostatventils kann es durch eine Feder des Thermostatventils, die nicht dargestellt ist, zu einer Eigendrehung des äußeren Teil 2a mit der Kappe 10 gegenüber dem inneren Teil 1a kommen. Um diese zu vermeiden sind bei einem erfindungsgemäßen Thermostatventil Mittel zur Verhinderung der Eigendrehung vorgesehen.

Bei dem in den Figuren 1 bis 3 dargestellten Ausführungsbeispiel weist das innere Teil 1a einen inneren Zahnkranz 3a auf. Das äußere Teil 2a ist in einem dargestellten Bereich als Hülse ausgebildet. Von diesem Hülsenbereich erstrecken sich radial nach außen Stege. Einige der Stege sind über blattfederähnliche Abschnitte verbunden, die Federn 4a bilden. An den Federabschnitten sind Nocken 5a ausgebildet. Das äußere Teil 2a weist also Federn 4a auf, an die je ein Nocken 5a angeformt ist. Die Nocken 5a und die Feder 4a bilden zusammen mit dem äußeren Teil 2a ein Kunststoffspritzgussteil. Die Nocken 5a greifen in Kerben zwischen zwei Zähnen des Zahnkranzes 3a des inneren Teils 1a ein. Dadurch wird eine Hemmung des äußeren Teils 2a gegenüber dem inneren Teil 1a erreicht. Die Hemmung ist ausreichend, um einer Eigendrehung des äußeren Teils 2a und der Kappe 10 entgegenzuwirken.

Auch das in Figur 4 dargestellte Ausführungsbeispiel weist einen Zahnkranz 3b an einem inneren Teil 1b auf. In dem äußeren Teil 2b sind radiale Ausnehmungen vorgesehen, in denen Federn 4b angeordnet sind. In die Federn sind Eingriffselemente mit Nocken 5b eingesetzt. Die Nocken 5b greifen zwischen zwei Zähnen des Zahnkranzes 3b des inneren Teils 1b. Auch hierdurch wird eine ausreichende Hemmung erreicht, um eine Eigendrehung zu verhindern.

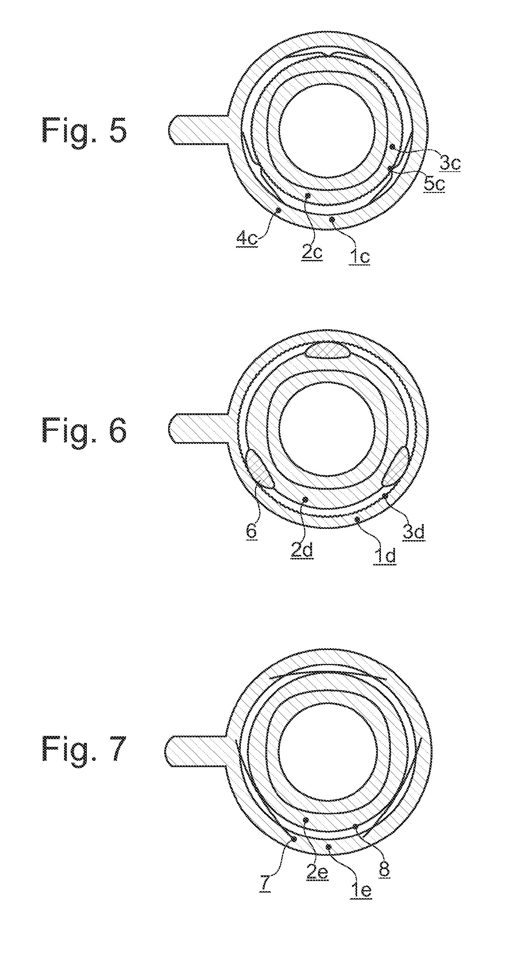

Bei dem in Figur 5 dargestellten Ausführungsbeispiel weist das äußere Teil 2c einen äußeren Zahnkranz auf. An dem inneren Teil 1c sind Eingriffselemente vorgesehen. Diese werden überwiegend durch Blattfedern 4c gebildet, die als Stanzbiegeteil ausgebildet sind und einen Nocken 5c tragen. Durch eine Vorspannung der Blattfedern 4c greifen die Nocken 5c in den Zahnkranz 3c ein. Wie in den vorherigen Beispielen wird dadurch eine Hemmung erreicht, die ausreichend ist, um eine Eigendrehung des äußeren Teils 2c gegenüber dem inneren Teil 1c zu vermeiden.

Bei dem Ausführungsbeispiel gemäß Figur 6 ist wiederum ein innerer Zahnkranz 3d an einem inneren Teil 1d vorgesehen. Das äußere Teil 2d weist Eingriffselemente 6 auf. Diese Eingriffselemente 6 sind aus einem elastischen Material gebildet. Die Eingriffselemente 6 liegen unter Vorspannung an dem inneren Zahnkranz 3d des inneren Teils 1d an und greifen in die Kerben zwischen den Zähnen des Zahnkranzes 3d ein. Auch hierdurch wird eine Hemmung erreicht, die eine Eigendrehung des äußeren Teils 2d gegenüber dem inneren Teil 1d verhindert.

Anders als die vorherigen Ausführungsbeispiele weist das Ausführungsbeispiel gemäß Figur 7 keinen Zahnkranz und keine Eingriffselemente auf, die in den Zahnkranz eingreifen. In dem äußeren Teil 2e ist eine Zylinderfläche 8 vorgesehen. Außerdem sind Blattfedern 7 vorgesehen, die an dem inneren Teil 1e befestigt sind. Die Blattfedern 7 spannen einen Bogen zwischen zwei Stellen des inneren Teils 1e ähnlich einer Sekante an einem Kreis. Die Blattfedern 7 liegen vorgespannt an der Zylinderfläche 8 des äußeren Teils 2e an. Die reibschlüssige Verbindung ist ausreichend, um eine Eigendrehung des äußeren Teils 2e gegenüber dem inneren Teil 1e zu verhindern.

## Patentansprüche

1. Thermostatventil, insbesondere für Heizkörper oder dergleichen, mit einem Ventilunterteil und einem Thermostataufsatz (A), wobei der Thermostataufsatz (A) an dem Ventilunterteil befestigt ist und wobei der Thermostataufsatz (A) zumindest ein inneres Teil (1a bis 1e) und zumindest ein äußeres Teil aufweist und das zumindest eine äußere Teil (2a bis 2e) durch Betätigung durch einen Benutzer oder ein Stellglied gegenüber dem inneren Teil (1a bis 1 e) drehbar ist,
**dadurch gekennzeichnet, dass**
der Thermostataufsatz Mittel zur Verhinderung einer Eigendrehung des zumindest einen äußeren Teils (2a bis 2e) gegenüber dem zumindest einen inneren Teil (1a bis 1 e) aufweist.

2. Thermostatventil nach Anspruch 1 , **dadurch gekennzeichnet, dass** die Mittel zur Verhinderung der Eigendrehung einen Zahnkranz (3a bis 3d) umfassen.

3. Thermostatventil nach Anspruch 2, **dadurch gekennzeichnet, dass** die Mittel zur Verhinderung der Eigendrehung Eingriffselemente aufweisen, die in den Zahnkranz (3a bis 3d) eingreifen.

4. Thermostatventil nach Anspruch 3, **dadurch gekennzeichnet, dass** die Eingriffselemente zumindest einen Nocken (5a bis 5c) oder zumindest eine Nase umfassen.

5. Thermostatventil nach Anspruch 4, **dadurch gekennzeichnet, dass** die Eingriffselemente zumindest eine Feder (4a bis 4c) umfassen, die geeignet und eingerichtet ist, den zumindest einen Nocken (5a bis 5c) oder die zumindest eine Nase in eine Kerbe zwischen zwei Zähnen des Zahnkranzes (3a bis 3c) zu drücken.

6. Thermostatventil nach Anspruch 5, **dadurch gekennzeichnet, dass** der zumindest eine Nocken (5a, 5c) oder die zumindest eine Nase und die Feder (4a, 4c) als ein Teil hergestellt sind.

7. Thermostatventil nach Anspruch 6, **dadurch gekennzeichnet, dass** der zumindest eine Nocken (5a) oder die zumindest eine Nase und die Feder (4a) ein Kunststoffspritzgussteil sind.

8. Thermostatventil nach Anspruch 7, **dadurch gekennzeichnet, dass** das zumindest eine äußere Teil (2a) in einem Bereich als Hülse ausgebildet ist, an die sich radial nach Außen Stege erstrecken, und dass zumindest einige der Stege über blattfederähnliche Federabschnitte (4a) verbunden sind und an den Federabschnitten Nocken (5a) ausgebildet sind.

9. Thermostatventil nach Anspruch 6, **dadurch gekennzeichnet, dass** der zumindest eine Nocken (5c) oder die zumindest eine Nase und die Feder (4c) ein Stanzbiegeteil aus Metall sind.

10. Thermostatventil nach Anspruch 9, **dadurch gekennzeichnet, dass** die Feder eine Blattfeder (4c) ist, die auf einer ersten Seite eingekerbt ist und die Kerbe auf einer zweiten Seite der Blattfeder als Nocke (5c) ausgeprägt ist.

11. Thermostatventil nach Anspruch 5, **dadurch gekennzeichnet, dass** der zumindest eine Nocken (5b) oder die zumindest eine Nase und die Feder (4b) als verschiedene Teile ausgebildet sind.

12. Thermostatventil nach Anspruch 3, **dadurch gekennzeichnet, dass** die Eingriffselemente Elemente (6) aus einem Elastomer sind, die an dem Zahnkranz (3d) anliegen.

13. Thermostatventil nach einem der Ansprüche 2 bis 12, **dadurch gekennzeichnet, dass** der Zahnkranz ein äußerer Zahnkranz (3c) ist, der an dem zumindest einen äußeren Teil (1c) des Thermostataufsatzes vorgesehen ist, und dass die Eingriffselemente (5) an dem zumindest einen inneren Teil (2c) des Thermostataufsatzes vorgesehen sind.

14. Thermostatventil nach einem der Ansprüche 2 bis 12, **dadurch gekennzeichnet, dass** der Zahnkranz ein innerer Zahnkranz (3a, 3b, 3d) ist, der an dem zumindest einen inneren Teil (1a, 1 b, 1d) des Thermostataufsatzes vorgesehen ist, und dass die Eingriffselemente (5a, 5b, 6) an dem zumindest einen äußeren Teil (2a, 2b, 2d) des Thermostataufsatzes vorgesehen sind.

15. Thermostatventil nach Anspruch 1, **dadurch gekennzeichnet, dass** die Mittel zur Verhinderung der Eigendrehung eine Zylinderfläche (8) und ein elastisches Element, z. B. eine Blattfedern (7) oder ein Element aus einem Elastomer umfassen, wobei das elastische Element eingespannt ist und vorgespannt an der Zylinderfläche (8) anliegt.

16. Thermostatventil nach Anspruch 15, **dadurch gekennzeichnet, dass** die Zylinderfläche (8) an dem zumindest einen äußeren Teil (2e) des Thermostataufsatzes vorgesehen ist, und dass das elastische Element an dem zumindest einen inneren Teil (1e) des Thermostataufsatzes angebracht ist.
